# EUROPEAN PATENT APPLICATION

(11) **EP 4 659 844 A1**
(43) Date of publication of application: **10.12.2025**
(21) Application number: 25180258.3
(22) Date of filing: 02.06.2025
(51) Int. Cl.: B01D 53/86, B01J 8/02

(54) **RADIAL-AXIAL REACTOR FOR CONDUCTING A SCR-DENOX OR DE-N2O PROCESS**

(30) Priority: 04.06.2024 PL 44875924
(71) Applicant: Siec Badawcza Lukasiewicz - Instytut Nowych Syntez Chemicznych, 24-110 Pulawy (PL); Politechnika Lubelska, 20-618 Lublin (PL)
(72) Inventor: Capa a, Pawe, 24-100 Go b (PL); Ruszak, Monika, 30-698 Kraków (PL); Rajewski, Jakub, 26-600 Radom (PL); Wilk, Marcin, 24-100 Pu awy (PL); Rudawska, Anna, 20-828 Lublin (PL)
(74) Representative: Suszek, Aleksander

(57) **Abstract**

The reactor comprises in its interior an axially mounted catalytic basket (6) with the shape of a cylindrical vessel open at the top, said catalytic basket having a solid (i.e. gas-impermeable) outer side wall ending with a flange to fix the basket to the reactor's wall, and a solid bottom (12).

Inside the basket there is an internal catalytic section (4) containing a catalyst bed, said section being delimited by a perforated side wall (9) fixed to the solid bottom (12) and by a perforated cover plate (8), the space between the solid wall (6) and the perforated side wall (9) of the basket being open at the top to ensure unobstructed gas flow into the bed radially.

Inside the catalytic section (4) there is an axially positioned central pipe (5) with perforated walls, seated in an opening in the bottom (12) of the catalytic basket and open toward the interior of the reactor. The catalyst fills the space around and above the central pipe (5).

## Description

The object of the present invention is a reactor for the selective catalytic reduction (SCR) of nitrogen oxides NOₓ (SCR-deNOₓ) or decomposition of nitrous oxide (deN₂O) with a radial-axial configuration of the catalytic basket ensuring gas flow through the catalyst bed in axial and radial directions, intended for use in nitric acid plants, hydroxylamine plants and other sources of gaseous emissions of NOₓ or N₂O into the atmosphere, especially in nitric acid plants.

### STATE OF THE ART

Tail gases left over from the nitric acid manufacturing process contain unreacted NO and NO₂ nitrogen oxides (collectively referred to as NOₓ) and N₂O nitrous oxide, whose emissions are legally regulated (Directive 2010/75/EU of the European Parliament and of the Council of 24.11.2010, EU Council Decision 2017/1757 of 17 July 2017). According to the BAT guidelines, one of the best available techniques for purifying the tail gases stream from NOₓ oxides is the method of selective catalytic reduction using ammonia. The process is carried out in a reactor (SCR)-designed for this purpose, installed in the tail gases pipeline, upstream or downstream of the expansion turbine (depending on the preferred operating conditions of the deNOₓ catalyst).

The efficiency of the tail gases purification from nitrogen oxides in the SCR reactor is influenced by the type and shape of the catalyst used and the design of the catalytic basket, used to support and stabilize the catalyst bed. The design of the catalytic basket determines how the catalyst bed is arranged in the reactor and the direction of the purified gas flow through it (gas flow geometry), which determines the magnitude of pressure drops in the SCR reactor and the linear gas flow velocity in the catalyst bed. The resistance of tail gases flow is significant aspect when installing a selective catalytic reduction reactor upstream of the expansion turbine, since it translates into the amount of energy recovery in the expansion turbine and the operating costs of the SCR process. Pressure drops in the SCR reactor are proportional to the square of the linear gas velocity in the catalyst bed. The linear gas velocity affects the catalytic reaction rate in the diffusion regime, i.e. over the shaped catalyst beds. By reducing itthe efficiency of the deNOₓ or deN₂O processes can be increased.

Catalytic basket designs, most commonly used in industrial practice, provide for the flow of the purified gases through the catalyst bed in the axial (preferred solution for monolith catalysts), radial or lateral direction (preferred solution for the fine-shaped catalysts). The most commonly used solution in nitric acid plants is the radial reactor in case of using a fine-shaped catalyst and the axial reactor in case of using a monolith catalyst.

An axial flow reactor for conducting catalytic processes is well known from the state of the art (e.g. US patent application 20140363359). It has the simplest design and allows for the use of more space inside to install the catalyst bed compared to other SCR reactor solutions. In addition, it provides easy loading and unloading of the catalyst. Its disadvantages, however, are the higher gas flow resistances and linear gas velocity through the catalyst bed compared to the reactors, in which the purified gas flows perpendicularly to the reactor axis (radial and lateral flow). This translates into the lower nitrogen oxide conversion rates compared to the radial and LFR reactors.

Also known is a radial flow SCR reactor (e.g. US patent application 20140363359, US patent 11325069 B2). The radial flow reactor works well in plants with high gas flow rates through the catalyst bed, where large volumes of the gas per unit time are required to be purified, without generating large pressure drops in the SCR reactor. For the same volumetric gas flow rate and catalyst bed volume, the pressure drop in a radial flow reactor will be at least 40% lower than in the axial one. In the radial flow reactor, settling of the catalyst bed is the significant problem, contributing to the uneven gas velocity distribution over the bed and the gas bypassing. Therefore, it is necessary to install a solid cover plate protecting the bed from gas bypassing and to use up to 20% excess of the catalyst over the amount required to achieve the assumed nitrogen oxides conversion (compensating for the settling of the catalyst bed). The need to use more catalyst, acting only as a sealing layer, and the related need for a larger reactor size and a heavy, solid basket cover plate, increases the cost of SCR technology. The complicated design of the radial basket also makes handling of the catalyst more complex. Another problem may be the difficulty in achieving uniform gas flow through the catalyst bed along the reactor axis, due to the low gas flow resistances, resulting in uneven exploitation of the catalyst bed.

From the patent literature, reactor designs are known, where the flow of the purified gas is carried out in radial and axial directions. Many of the proposed solutions (EP 1515791 B1, EP 3873656 B1, EP1515791B1, US 2014/0363359 A1) consist in installing at least two catalyst beds in the SCR reactor, through which the gas stream flows differently (in the radial and axial directions). The catalyst beds are coaxially arranged in annular and cylindrical sections along the reactor axis. The gas flow path is defined by the basket's perforated and solid walls/baffles, arranged so that the gas stream first flows through the first and then the second catalyst bed. Installing two catalysts/catalysts beds in the reactor, separated by a space, requires more space inside the reactor and, thus, using a larger reactor. This also requires providing more space for building an SCR reactor in the plant's technological line.

Also known are the axial and radial flow reactor designs with a single catalyst bed or two adjacent catalyst beds, separated by a perforated and a solid baffle.

Patent application WO 01/23080 discloses a solution for an axial and radial flow reactor with a single catalyst bed placed in an annular partition of a cylindrical or truncated cone shape, in which the space between the outer surface of the catalyst bed and the inner walls of the reactor is filled with a shaped inert material that pose lower resistance to the gas flow compared to the catalyst bed. The two beds are separated by a perforated baffle, allowing the gas stream to flow through the catalyst bed in both axial and radial directions.

Patent EP 3515586 B1 discloses a solution of an axial-radial flow reactor , in which a perforated and solid baffles separate the two catalyst beds. The beds of both catalysts are placed in cylindrical annular partitions, coaxially along the reactor diameter . The side walls of the catalytic baskets and the cover plate closing them from above are perforated, while the bottom walls of the baskets are gas-impermeable. The first catalyst bed is placed in the outer annular partition and the top part of the inner annular partition. The second catalyst bed contacts the first catalyst bed only through the perforated side wall, while it is not in contact with it at the top part of the inner annular partition. The purified gas flows through the first catalyst bed in the axial and radial directions, while it flows through the second catalyst bed only in the radial direction. It is then collected in a central pipe and directed to the reactor outlet. The top layer of the first catalyst bed acts as a sealing layer, preventing the gas flow from bypassing in the upper part of the basket and, simultaneously participating in the catalytic process. The perforations on the central pipe only allow the gas to enter in the radial direction. Using a reactor with a mixed axial and radial flow, according to the solution disclosed in patent EP 3515586 B1, ensures better utilization of the space inside the reactor and exploits the advantages of both ways of gas flow through the catalyst beds. The first catalyst bed (or part of the catalyst bed), installed in a way that ensures at least partial flow of the gas stream in the axial direction, acts as a sealing layer protecting the system from gas bypassing and at the same time participating in the catalytic process. In this case, using a lighter perforated cover plate at the top of the catalyst bed is possible, which is a less costly solution than the solid cover plate in a radial reactor and provides lower gas flow resistances . Inside the catalyst beds, a mixed gas flow is created, incorporating an axial and radial velocity components, ensuring a better distribution of the gas within their volume.

The purpose of the present invention is to provide a lower linear gas velocity and lower gas pressure drop across the catalyst bed as well as higher catalyst efficiency compared to currently existing radial and axial reactor solutions by using a selective catalytic reduction (SCR) reactor with a catalytic basket forcing radial and axial gas flow directions through a single catalyst bed.

### DISCLOSURE OF THE INVENTION

The object of the present invention is a radial-axial flow reactor for conducting the process of NOₓ selective catalytic reduction (SCR-deNOₓ) or catalytic decomposition of nitrous oxide (deN₂O), ensuring the flow of the gas being treated through a catalyst bed in the axial and radial directions, said reactor being a vertical vessel with a gas inlet in the upper part and a gas outlet in the bottom part, which is characterized in that it comprises in its interior an axially mounted catalytic basket with the shape of a cylindrical vessel open at the top, said catalytic basket having a solid (i.e. gas-impermeable) outer side wall ending with a flange to fix the basket to the reactor's wall, and a solid bottom, and inside the basket there is an internal catalytic section containing a catalyst bed, said section being limited by a perforated side wall fixed to the solid bottom, and by a perforated cover plate, the space between the solid and the perforated side walls of the basket being open at the top to ensure unobstructed gas flow into the bed radially, while inside the catalytic section there is an axially positioned central pipe with perforated walls, seated in an opening in the bottom of the catalytic basket and open toward the inside of the reactor, the catalyst filling the space around and above the central pipe.

Preferably, the height of the central perforated pipe is 70-90%, most preferably 80% of the catalyst bed height, to ensure an optimum share of the axial flow in the bed.

Preferably, the diameter of the central perforated pipe is 10-30% of the inner diameter of the catalytic section.

Preferably, the diameter of the inner catalytic section limited by the perforated side wall is 75-90% of the outer diameter of the basket's cylindrical section.

The empty space between the gas-impermeable outer wall of the catalytic basket and the perforated wall of the cylindrical inner section ensure that the gas stream flows into the bed radially. The perforated basket's cover plate and the catalyst layer above the central pipe ensure the inflow of the gas stream into the catalyst bed in the axial direction. The basket design ensures a mixed radial-axial flow through the catalyst bed to the central pipe, through which the gas stream exits the catalytic section in the axial direction.

The diameter of the holes in the inner perforated wall of the catalytic basket is chosen to ensure unobstructed gas flow and protect the catalyst bed from being displaced or entrained by the gas stream.

Preferably, the active area of the perforated side wall and central pipe, understood as the ratio of the total area of the holes to the total perforated area, is 30-35% of the total perforated area.

According to the invention, the originality of solution lies in combining the advantages of radial and axial flow reactor design while eliminating the disadvantages of the solutions used with only radial and axial flow. Using the radial-axial design according to the invention allows better use of the space inside the SCR reactor than radial flow only. According to the invention, it does not require a heavy solid basket's cover plate that would generate higher gas pressure drops than a perforated one. Perforations in the upper part of the central pipe also ensure lower gas pressure drops compared to the solution, according to the invention disclosed in EP 3515586 B1.

Unexpectedly, it was found that the solution according to the present invention provides a lower linear gas velocity through the catalyst bed and improves the gas distribution throughout the bed, compared to the SCR reactors forcing gas flow through the catalyst bed only in the axial or radial direction, while providing 2-3 times lower gas pressure drops across the catalyst bed compared to the radial flow reactor. In the case of a nitric acid plant, the above benefits will contribute to a more efficient catalytic process, with simultaneously lower gas pressure drops in the SCR reactor and therefore higher energy recovery in the expansion turbine.

The tail gases are fed to the SCR reactor through the inlet and are directed onto the catalyst bed in the axial direction through the perforated cover and radially through the perforated side wall of the catalytic basket. They flow through the catalyst bed in the axial and radial direction into the central perforated pipe and are directed through it in the axial direction to the reactor outlet. The design of the catalytic basket according to the present invention allows the purified gas stream to inflow onto the cylindrical catalyst bed at the same velocity both through the perforated cover plate and the perforated side wall of the catalytic basket. The design of the upper perforated cover plate prevents migration of the catalyst bed caused by the flowing gas stream.

The present invention eliminates the disadvantages of the catalytic basket designs known from the patent literature and industrial practice by using a mixed gas flow through the catalyst bed without additional baffles to direct the gas flow inside the basket. The simple design of the inner basket's section supporting the catalyst layer with a lighter perforated cover plate and a perforated inner pipe of a lower height than the height of the catalyst bed provides three times lower linear gas velocity and five times lower gas flow resistance across the catalyst bed, compared to a basket with only axial gas flow direction through the catalyst bed (axial design). In addition, it provides a twofold lower linear gas velocity and a threefold lower gas pressure drop across the bed compared to a catalyst basket of radial design. The lower linear gas velocity increases the efficiency of the catalyst. Reducing gas flow resistance enables greater energy recovery in the expansion turbine in nitric acid plants. The catalytic basket design provides easier loading of the catalyst compared to a radial flow basket and facilitates its maintenance.

The invention will have applications in industrial plants emitting NOₓ and possibly N₂O oxides in the tail gases stream, especially as a reactor for the selective catalytic reduction of nitrogen oxides in the tail gases stream from the nitric acid production process. The catalytic basket design according to the invention can also be adapted to existing radial flow SCR reactors.

### EXAMPLE OF THE INVENTION

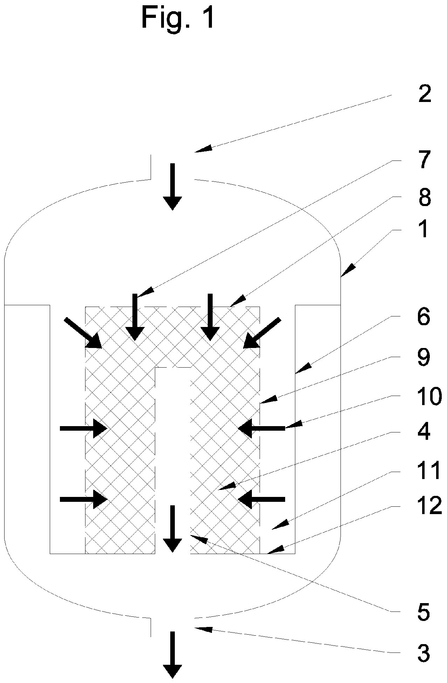

The present invention is illustrated in an embodiment in Figure 1, showing a vertical cross-section of a reactor with a basket and a catalyst bed.

The reactor 1, according to the invention, has the shape of a vertical cylindrical apparatus with ellipsoidal top and bottom heads. The top head comprises a tail gases inlet 2, and the bottom head includes an outlet 3 for the treated/purified gas stream. Inside reactor 1, there is a catalytic basket 6 centrally located to the vertical axis of the reactor. It is in the shape of a cylindrical vessel open from above, the upper edge of which is connected by a flange to the reactor's wall. Inside the basket 6, is an internal catalytic section 4 containing a catalyst bed. This catalyst fills the space between a perforated side wall 9, a perforated cover plate 8, and a vertical central pipe 5. The central pipe 5 is axially positioned inside the catalytic section and provides the gas stream inflow in the axial and mixed axial-radial directions. The central pipe 5 is fixed to an opening in the bottom 12 of the catalytic basket 6 and is opened at the bottom and closed with a perforated plate at the top, while its walls are perforated. The space between the perforated central pipe 5 and the perforated walls of the catalytic section is filled with catalyst 4. The catalyst bed also fills the space between the perforated cover plate 8 and the perforated central pipe 5. The cylindrical space 11 between the outer solid wall of the catalytic basket 6 and the perforated inner side wall 9 is empty, thus providing an inflow of the gas onto the catalyst bed in the radial direction 10.

### EXAMPLE OF THE INVENTION APPLICATION

A catalytic basket according to the invention, providing radial and axial flow through an SCR-deNOₓ catalyst bed, was tested in a pilot SCR reactor, which is one of the technological nodes of a nitric acid pilot plant with a maximum capacity of 2 t HNO₃/d. The operating parameters of the SCR reactor were as follows:

| | |
|---|---|
| Tail gases flow rate | 150 Nm³/h |
| Temperature | 400°C |
| Pressure | 350 kPa |
| NO_{X} concentration in tail gases | 700 ppm |
| Gas pressure drop across the bed | 0.028 kPa |

Ammonia was introduced into the tail gases stream in a volume ratio NH₃/NO₍ₓ₎ = 1:1 to achieve the maximum possible NOₓ reduction. A catalyst composed of vanadium, iron, and aluminium oxides was used, constituting a solution according to the patent PL244075 B1,. Using the catalytic basket according to the present invention enabled achieving a minimum 97% NOₓ reduction with an NH₃ slip not exceeding 2 ppm. The solution according to the present invention was compared under similar process conditions and using the same catalyst with the operation of other catalytic basket designs, forcing the gas flow through the catalyst bed only in the axial or radial direction, installed in the same pilot reactor. Using a catalytic basket forcing the axial flow direction of the tail gases through the catalyst bed, the NOₓ reduction rate was 28% lower than in the catalytic basket solution according to the present invention, while the gas flow resistance was 5 times lower. Utilizing a catalytic basket that forced the radial flow direction of the tail gases stream through the catalyst bed, the NOₓ reduction rate was 20% lower than that achieved in the catalytic basket according to the present invention, while the pressure drop was about three times lower.

## Claims

1. A radial-axial flow reactor for conducting the process of NOx selective catalytic reduction (SCR-deNOx) or catalytic decomposition of nitrous oxide (deN2O), ensuring the flow of the gas being treated through a catalyst bed in the axial and radial directions, said reactor being a vertical vessel with a gas inlet in the upper part and a gas outlet in the bottom part, **characterized in that** it comprises in its interior an axially mounted catalytic basket (6) with the shape of a cylindrical vessel open at the top, said catalytic basket having a solid (i.e. gas-impermeable) outer side wall ending with a flange to fix the basket to the reactor's wall, and a solid bottom (12), and inside the basket there is an internal catalytic section (4) containing a catalyst bed, said section being delimited by a perforated side wall (9) fixed to the solid bottom (12) and by a perforated cover plate (8), the space between the solid wall (6) and the perforated side wall (9) of the basket being open at the top to ensure unobstructed gas flow into the bed radially, while inside the catalytic section (4) there is an axially positioned central pipe (5) with perforated walls, seated in an opening in the bottom (12) of the catalytic basket and open toward the inside of the reactor, the catalyst filling the space around and above the central pipe (5).

2. The reactor according to Claim 1 **characterized in that** the height of the central perforated pipe (5) is 70-90%, most preferably 80% of the catalyst bed height.

3. The reactor according to Claim 2 **characterized in that** the diameter of the central perforated pipe (5) is 10-30% of the inner diameter of the catalytic section (4).

4. The reactor according to Claim 1 **characterized in that** the diameter of the inner catalytic section delimited by the perforated side wall is 75-90% of the outer diameter of the cylindrical section of the catalytic basket (6).

5. The reactor according to Claim 1 **characterized in that** the active area of the perforated side wall (9) and the central pipe (5) is 30-35% of the total perforated area.

6. The reactor according to any of the Claims 1-5 **characterized in that** it is used in industrial plants emitting NOx and possibly N2O oxides in the tail gases stream.

7. The reactor according to Claim 6 **characterized in that** it is used for the selective catalytic reduction of nitrogen oxides in the tail gases stream from a nitric acid production process.
